# EUROPÄISCHE PATENTSCHRIFT

(11) **EP 2 380 764 B1**
(45) Veröffentlichungstag und Bekanntmachung des Hinweises auf die Patenterteilung: **11.06.2014**
(21) Anmeldenummer: 11003045.9
(22) Anmeldetag: 12.04.2011
(51) Int. Cl.: B60J 7/22

(54) **Windabweiser für KFZ-Dachöffnungen**
Wind deflector for roof opening of automotive vehicle
Déflecteur de vent pour l'ouverture de toit d'un véhicule automobile

(30) Priorität: 21.04.2010 DE 102010015732
(43) Veröffentlichungstag der Anmeldung: 26.10.2011
(73) Patentinhaber: Audi AG, 85045 Ingolstadt (DE)
(72) Erfinder: Herbig, Mike, 92339 Beilngries (DE)
(74) Vertreter: Geissler, Manfred

(56) Entgegenhaltungen:
- EP-A1- 1 378 387
- DE-A1-102004 048 375
- DE-C1- 10 137 363
- GB-A- 2 157 634

## Beschreibung

Die Erfindung betrifft einen Windabweiser zur Geräuschminderung an einer Dachöffnung eines Fahrzeugs gemäß dem Oberbegriff des Anspruchs 1.

An für Kraftfahrzeuge vorgesehenen Dachöffnungssystemen, wie z.B. Schiebedächern und Schiebe-Austelldächern usw., werden derzeit z.B. Bügelwindabweiser zur Strömungsoptimierung und Vermeidung von Schwingungen und Resonanzen an einer Dachöffnung (überströmter Hohlraum) eingesetzt. Als Bügelwindabweiser wird ein Windabweiser angesehen, der in Form eines sich über eine gesamte Breite einer Dachöffnung eines Dachöffnungssystems eines Fahrzeugs erstreckenden Bügels ausgebildet ist, wobei an zwei gegenüberliegenden Längsenden des Bügelwindabweiser zwei Schwenklagerabschnitte vorgesehen sind, die jeweils schwenkbar in zwei nahe der Dachöffnung an einer Karosserie des Fahrzeugs vorgesehene Lageraufnahmen zu montieren sind.

Ein wie hierin beschriebener Windabweiser soll in seiner Grundfunktion eine beim Fahren mit einem Fahrzeug durch den Fahrtwind hervorgerufene Luftströmung so über die Dachöffnung führen bzw. die Luftströmung so stören, dass eine möglichst optimale Akustik bei gleichzeitiger Vermeidung von Schwingungs- und Wummerneigungen im Fahrzeug erreicht wird.

Zusätzlich können hervorgerufene Biegeschwingungen wie auch Eigenschwingungen des Windabweisers Auslöser für weitere Luft- und Strukturschwingungen am Fahrzeug sein, welche zu Geräuschen, wie z.B. einem Dröhnen (z.B. einer Dachhaut), führen können.

Entsprechende Windabweiser zur Geräuschminderung an einer Dachöffnung eines Fahrzeugs sind beispielsweise in DE 196 26 937 A1, US 4,662,671 und DE 196 43 234 C1 beschrieben.

Die GB 2 157 634 A offenbart eine Windabweiseranordnung für ein Kraftfahrzeugdach mit einer Dachöffnung, die durch einen Schiebedeckel verschließbar ist, mit einem entlang der Vorderkante der Dachöffnung angeordneten, um eine quer zur Fahrzeuglängsachse liegende Achse schwenkbaren Windabweiser, der einen bei Öffnen des Schiebedeckels durch Federkraft ausschwenkbaren und bei Schließen des Schiebedeckels durch Auflaufen eines in Abhängigkeit von der Deckelbewegung verstellbaren Noppens auf mindestens einen Schwenkarm einschwenkbaren Körper aufweist, der mit dem Schwenkarm über eine Mitnehmeranordnung verbunden ist. Die Windabweiseranordnung zeichnet sich dadurch aus, dass der Körper des Windabweisers mindestens teilweise aus einem nicht nachbearbeiteten Profilteil besteht, dessen beiden Seitenkanten von je einem Endstück abgedeckt sind, dass zu gleich einen Teil der Mitnehmeranordnung bildet. Vorzugsweise ist hierbei der Windabweiserkörper aus einem Leichtmetall- Strangbrettprofilteil und einem in Windabweiser Längsrichtung verlaufenden zusätzlichen Bauteil aus Kunststoff oder Gummi ausgebildet.

Ein weitere gattungsgemäßer, sämtliche Merkmale des Oberbegriffs des Patentanspruches 1 aufweisender Windabweiser ist in der EP 1 378 387 A1 offenbart.

Der Erfindung liegt die Aufgabe zugrunde, einen Windabweiser gemäß dem Oberbegriff von Anspruch 1 bereitzustellen, wobei der Windabweiser derart ausgestaltet ist, dass unter Beibehaltung von dessen Grundfunktion eine Übertragung von an dem Windabweiser auftretenden Schwingungen auf das Fahrzeug und eine auf diesen Schwingungen basierende Geräuschentwicklung im Fahrzeug sicher vermieden werden.

Dies wird mit einem Windabweiser gemäß Anspruch 1 erreicht. Weiterbildungen der Erfindung sind in den abhängigen Ansprüchen definiert.

Erfindungsgemäß wurde erkannt, dass ein Windabweiser Auslöser für Luft- und Strukturschwingungen am Fahrzeug sein kann, welche zu Geräuschen, wie z.B. einem Dröhnen (z.B. einer Dachhaut), führen können. Die Frequenzen solcher Luft- und Strukturschwingungen liegen mit z.B. 30-50 Hz höher als bei durch die Überströmung der Dachöffnung hervorgerufenen Wummergeräuschen (z.B. 20 Hz). Bisher kommen daher Lösungen wie z.B. Netzwindabweiser, Netz-Bügelwindabweiser und Schartenwindabweiser mit schlechterer akustischer Performance zum Einsatz.

Gemäß der Erfindung wird ein Windabweiser zur Geräuschminderung an einer Dachöffnung eines Fahrzeugs bereitgestellt, wobei der Windabweiser zwei Schwenklagerabschnitte aufweist, die jeweils schwenkbar in zwei nahe der Dachöffnung an einer Karosserie des Fahrzeugs vorgesehene Lageraufnahmen zu montieren sind, und wobei der Windabweiser mit ein schwingungs-dämpfendes Material aufweisenden Geräuschminderungsmitteln versehen ist. Der erfindungsgemäße Windabweiser zeichnet sich dadurch aus, dass das schwingungsdämpfende Material als Zwischenelement in einem über den Windabweiser von einer Lageraufnahme bis zu der anderen Lageraufnahme reichenden Schwingungspfad an dem Windabweiser vorgesehen ist, so dass das schwingungsdämpfende Material eine Schwingungsübertragung entlang des Schwingungspfades dämpft.

Der Einsatz eines derart mit schwingungsdämpfendem Material als Zwischenelement im Schwingungspfad ausgerüsteten Windabweisers unterbindet die die zusätzlichen Geräusche (wie z.B. Dröhnen) auslösende Schwingungsform, wobei die Grundfunktionalität des Windabweisers, insbesondere bezüglich der Aeroakustik bzw. akustischen Performance, beibehalten bleibt. Das schwingungsdämpfende Material wirkt somit als ein Geräuschminderungsmittel.

Durch die erfindungsgemäße Anordnung des schwingungsdämpfenden Materials im Schwingungspfad von der einen Lageraufnahme bis zu der anderen Lageraufnahme ist der Windabweiser hinsichtlich seiner Schwingungen zumindest teilweise oder auch völlig von der Karosserie des Fahrzeugs entkoppelt. Das schwingungsdämpfende Material kann in seinem Dämpfungsgrad angepasst werden, so dass mit dem schwingungsdämpfenden Material Ergebnisse von einer geringen Dämpfung der Schwingungen bis zu einer völligen Sperrung bzw. Entkopplung der Schwingungen erzielt werden können.

Gemäß der Erfindung weist der Windabweiser eine Mehrzahl von strukturell getrennten gemeinsam eine Gesamtlänge des Windabweisers definierenden Windabweiserteilen auf, wobei zwischen benachbarten Windabweiserteilen jeweils eine Trennstelle gebildet ist, und wobei die Windabweiserteile an jeder Trennstelle mittels des schwingungsdämpfenden Materials miteinander verbunden sind.

So können z.B. zwei, drei oder auch mehr Windabweiserteile mit einer, zwei bzw. mehr Trennstellen vorgesehen sein. Die Anzahlen der Windabweiserteile und Trennstellen können z.B. nach den zu entkoppelnden Schwingungen und nach der zu erzielenden strukturellen Steifigkeit des Windabweisers gewählt werden. Mit der erfindungsgemäßen Unterteilung des Windabweisers in mehrere Windabweiserteile kann der Windabweiser demnach noch besser an die jeweilige Anwendung angepasst werden. In Tests wurde festgestellt, dass ein aus mehreren mittels schwingungsdämpfendem Material miteinander verbundenen Windabweiserteilen zusammengesetzter Windabweiser keine ausgeprägten Resonanzen im Anwendungskennfeld aufweist.

Gemäß einer Ausführungsform der Erfindung weisen benachbarte Windabweiserteile jeweilige einander jeweils mit einer Stirnseite zugewandte Verbindungsenden auf, wobei in der Stirnseite jedes Verbindungsendes eine Sackausnehmung bestimmter Tiefe ausgebildet ist, wobei das schwingungsdämpfende Material stoffschlüssig und/oder formschlüssig in die Sackausnehmungen eingesetzt ist, so dass eine mechanische Verbindung der benachbarten Windabweiserteile erzielt ist, und wobei das schwingungsdämpfende Material so geformt ist, dass die Stirnseiten der benachbarten Windabweiserteile mit Abstand voneinander angeordnet sind.

Diese Ausgestaltung der Erfindung ermöglicht ein einfaches und dennoch stabiles miteinander Verbinden der Windabweiserteile. Die Sackausnehmungen werden bevorzugt mit solch einer Tiefe ausgeführt, dass das schwingungsdämpfende Material darin ausfallsicher gehalten werden kann.

Die Windabweiserteile können beispielsweise als Spritzguss-Kunststoffteile ausgeführt sein, wobei die Sackausnehmungen in die Windabweiserteile eingeformt oder auch nachträglich z.B. via spanender Bearbeitung eingebracht werden können.

Das stoffschlüssige und/oder formschlüssige Befestigen des schwingungsdämpfenden Materials in den Sackausnehmungen kann beispielsweise durch Kleben, Vulkanisieren, Verrasten und/oder Verschrauben usw. realisiert sein. Das schwingungsdämpfende Material weist bevorzugt eine Länge auf, die größer als die Summe der Tiefen der beiden Sackausnehmungen der miteinander zu verbindenden bzw. verbundenen zueinander benachbarten Windabweiserteile ist, so dass die Stirnseiten der benachbarten Windabweiserteile mit Abstand voneinander angeordnet sind. Ein solcher Abstand kann z.B. 0,5 mm bis 2 mm betragen.

Durch den Abstand der Stirnseiten der benachbarten Windabweiserteile wird sicher eine Berührung der Stirnseiten und damit eine Schwingungsübertragung zwischen diesen vermieden.

Je nach Anzahl der Windabweiserteile und damit der Anzahl der Trennstellen kann jedes Windabweiserteil lediglich ein Verbindungsende oder auch zwei Verbindungsenden aufweisen. So werden z.B. bei drei Windabweiserteilen zwei äußere Windabweiserteile, die jeweils einen der Schwenklagerabschnitte aufweisen, jeweils nur ein einziges Verbindungsende haben, und wird ein zwischen diesen äußeren Windabweiserteilen angeordnetes Windabweiserteil zwei Verbindungsenden zur Verbindung mit den beiden äußeren Windabweiserteilen haben.

Gemäß einer Ausführungsform der Erfindung ist das schwingungsdämpfende Material so geformt, dass es den Abstand zwischen den Stirnseiten der benachbarten Windabweiserteile vollständig ausfüllt.

Auf diese Weise kann eine höhere strukturelle Biegefestigkeit des Windabweisers erzielt werden, da das schwingungsdämpfende Material beim Biegen des Windabweisers eine Verkleinerung des Abstandes zwischen den Stirnseiten der benachbarten Windabweiserteile verhindert bzw. minimiert.

Um den Abstand vollständig auszufüllen, kann das schwingungsdämpfende Material, welches z.B. eine dübelähnliche Form haben kann, im Bereich des Abstandes einen den Abstand ausfüllenden Bund, wie z.B. einen Ringbund oder Umlaufbund, aufweisen.

Andererseits kann natürlich, wenn eine entsprechende Flexibilität gewünscht wäre, der Abstand auch frei von schwingungsdämpfendem Material belassen werden.

Gemäß einer Ausführungsform der Erfindung weist der Windabweiser genau zwei strukturell getrennte gemeinsam eine Gesamtlänge des Windabweisers definierende Windabweiserteile auf.

Gemäß einer Ausführungsform der Erfindung definieren die beiden Windabweiserteile jeweils eine gleiche Teillänge der Gesamtlänge des Windabweisers. D.h., der Windabweiser weist seine hier einzige Trennstelle genau in seiner Längsmitte auf.

Gemäß einer Ausführungsform der Erfindung weist der Windabweiser mehr als zwei strukturell getrennte gemeinsam eine Gesamtlänge des Windabweisers definierende Windabweiserteile auf. In diesem Fall sind gemäß einer weiteren Ausführungsform der Erfindung zwei Trennstellen benachbart zu den Schwenklagerabschnitten angeordnet.

Durch die möglichst nahe Anordnung der Trennstellen an den Schwenklagerabschnitten kann eine maximale schwingungsmäßige Entkopplung des Windabweisers von der Karosserie des Fahrzeugs erzielt werden, da die mit den Schwenklagerabschnitten versehenen Windabweiserteile in diesem Fall sehr kurz und damit sehr schwingungsunempfindlich sind.

Gemäß einer Ausführungsform der Erfindung weist das schwingungsdämpfende Material ein elastisches Material auf und besteht insbesondere aus diesem. Bevorzugt weist das schwingungsdämpfende Material ein Elastomer auf und besteht insbesondere aus diesem.

Als Elastomer kommen z.B. Gummi bzw. unterschiedlichste Kautschuke sowie z.B. elastisch abgestimmtes Polyurethan in Betracht.

Gemäß einer Ausführungsform der Erfindung ist der Windabweiser in Form eines sich über eine gesamte Breite der Dachöffnung in Bezug auf das Fahrzeug erstreckenden Bügels ausgebildet. Mit anderen Worten ist der Windabweiser gemäß dieser Ausführungsform der Erfindung ein Bügelwindabweiser.

Gemäß einer Ausführungsform der Erfindung sind die beiden Schwenklagerabschnitte an zwei gegenüberliegenden Längsenden des Windabweisers angeordnet.

Im Folgenden wird die Erfindung anhand bevorzugter Ausführungsformen und unter Bezugnahme auf die beigefügten Figuren beschrieben.
- Fig.1: zeigt eine schematische Ansicht eines Windabweisers gemäß einer ersten Ausführungsform der Erfindung.
- Fig.2: zeigt eine schematische Ansicht eines Windabweisers gemäß einer zweiten Ausführungsform der Erfindung.

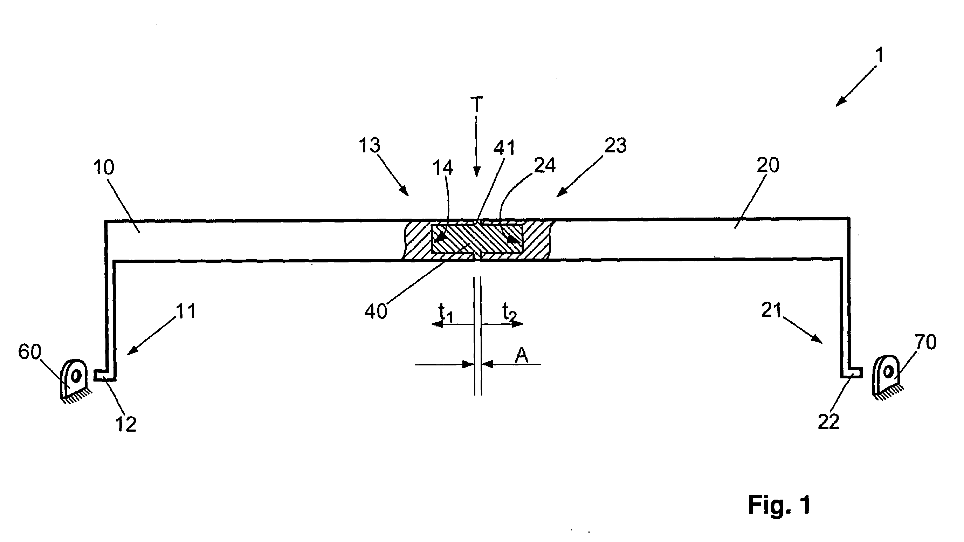

Fig. 1 zeigt einen Windabweiser 1 zur Geräuschminderung an einer Dachöffnung (nicht dargestellt) eines Fahrzeugs gemäß einer ersten Ausführungsform der Erfindung.

Der Windabweiser 1 ist in Form eines Bügelwindabweisers ausgebildet. D.h., der Windabweiser 1 ist in Form eines sich über eine gesamte Breite der Dachöffnung in Bezug auf das Fahrzeug erstreckenden Bügels ausgebildet.

Der Windabweiser 1 weist zwei strukturell getrennte gemeinsam eine Gesamtlänge des Windabweisers 1 definierende Windabweiserteile 10, 20 aus z.B. per Spritzgießen verarbeitetem Kunststoff auf, wobei zwischen den beiden Windabweiserteilen 10, 20 eine Trennstelle T gebildet ist. Die beiden Windabweiserteile 10, 20 definieren jeweils eine gleiche Teillänge der Gesamtlänge des Windabweisers 1. D.h., die Trennstelle T ist in einer Längsmitte des Windabweisers 1 angeordnet.

Jedes der beiden Windabweiserteile 10, 20 weist an einem dem jeweils anderen Windabweiserteil 20, 10 abgewandten Längsende 11, 21 dessen einen Schwenklagerabschnitt 12, 22 auf, wobei jeder Schwenklagerabschnitt 12, 22 schwenkbar in eine nahe der Dachöffnung an einer Karosserie (nicht dargestellt) des Fahrzeugs vorgesehene Lageraufnahme 60, 70 zu montieren ist. Die beiden Längsenden 11, 21 bilden zwei gegenüberliegende Längsenden des Windabweisers 1.

Die beiden Windabweiserteile 10, 20 sind an der Trennstelle T mittels eines in einer Dübelform ausgebildeten schwingungsdämpfenden Materials 40 (hier z.B. ein Elastomer in Form eines Gummimaterials) mechanisch miteinander verbunden.

Zu diesem Zweck weisen die beiden zueinander beriachbarten Windabweiserteile 10, 20 jeweilige einander jeweils mit einer Stirnseite zugewandte Verbindungsenden 13, 23 auf. In der Stirnseite jedes Verbindungsendes 13, 23 ist eine Sackausnehmung 14, 24 bestimmter Tiefe t1, t2 ausgebildet.

Das schwingungsdämpfende Material 40 ist stoffschlüssig und/oder formschlüssig in die Sackausnehmungen 14, 24 eingesetzt, so dass eine mechanische Verbindung der benachbarten Windabweiserteile 10, 20 erzielt ist. Im vorliegenden Fall ist das schwingungsdämpfende Material 40 in die Sackausnehmungen 14, 24 einvulkanisiert oder eingeklebt.

Das schwingungsdämpfende Material 40 ist so geformt, dass die Stirnseiten der benachbarten Windabweiserteile 10, 20 mit einem Abstand A voneinander angeordnet sind. Mit anderen Worten weist das schwingungsdämpfende Material 40 eine Länge auf, die größer als die Summe der Tiefen t1, t2 der beiden Sackausnehmungen 14, 24 der miteinander verbundenen Windabweiserteile 10, 20 ist, so dass die Stirnseiten der Windabweiserteile 10, 20 mit dem Abstand A voneinander angeordnet sind. Der Abstand A kann z.B. 0,5 mm bis 2 mm betragen.

Wie aus Fig. 1 ersichtlich, ist das schwingungsdämpfende Material 40 so geformt, dass es den Abstand A zwischen den Stirnseiten der beiden Windabweiserteile 10, 20 vollständig ausfüllt bzw. überbrückt. Zu diesem Zweck weist das schwingungsdämpfende Material 40 im Bereich des Abstandes A einen den Abstand A vollständig ausfüllenden Umlaufbund (bzw. umlaufenden Bund) 41 auf.

Wenn der Windabweiser 1 mit seinen Schwenklagerabschnitten 12, 22 in den Lageraufnahmen 60, 70 montiert ist, ist entlang des Windabweisers 1 ein von der einen Lageraufnahme 60 bis zu der anderen Lageraufnahme 70 reichender Schwingungspfad definiert, über den Schwingungen des Windabweisers 1 in die Karosserie des Fahrzeugs übertragen werden könnten.

Weil das schwingungsdämpfende Material 40 jedoch an dem Windabweiser 1 als Zwischenelement in dem Schwingungspfad vorgesehen ist, wird durch das schwingungsdämpfende Material 40 jegliche Schwingungsübertragung entlang des Schwingungspfades gedämpft und je nach Auslegung des schwingungsdämpfenden Materials 40 ggf. sogar vollständig gesperrt.

Das als Zwischenelement eingesetzte schwingungsdämpfende Material 40 unterbindet demnach die zusätzliche Geräusche (wie z.B. Dröhnen) auslösende Schwingungsform, wobei die Grundfunktionalität des Windabweisers 1, nämlich eine durch den Fahrtwind hervorgerufene Luftströmung so über die Dachöffnung zu führen bzw. die Luftströmung so zu stören, dass eine möglichst optimale Akustik bei gleichzeitiger Vermeidung von Schwingungs- und Wummerneigungen im Fahrzeug erreicht wird, beibehalten bleibt. Das schwingungsdämpfende Material 40 wirkt somit als ein Geräuschminderungsmittel.

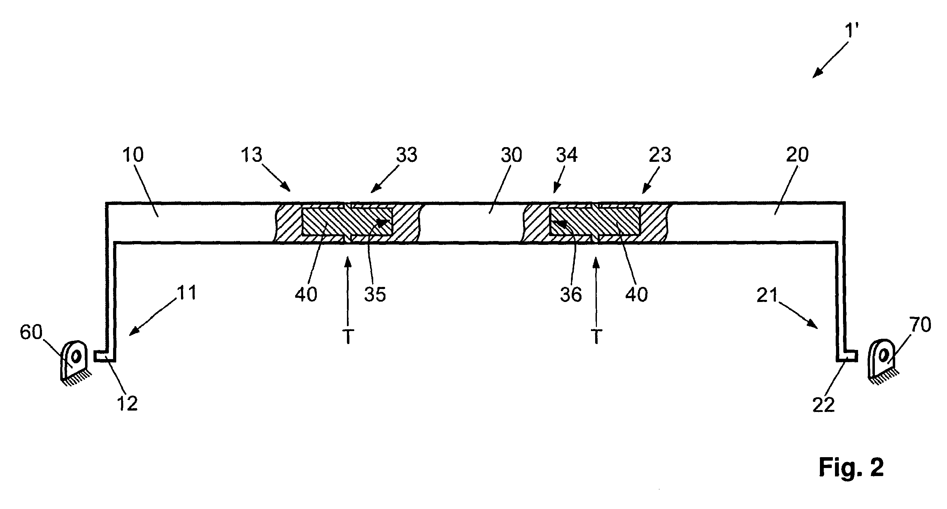

Fig.2 zeigt einen Windabweiser 1' zur Geräuschminderung an einer Dachöffnung (nicht dargestellt) eines Fahrzeugs gemäß einer zweiten Ausführungsform der Erfindung. Der Windabweiser 1' gemäß der zweiten Ausführungsform der Erfindung gleicht dem zuvor mit Bezug auf Fig. 1 beschriebenen Windabweiser 1 gemäß der ersten Ausführungsform der Erfindung bis auf einige Unterschiede.

Um unnötige Wiederholungen zu vermeiden, werden im Folgenden nur diese Unterschiede beschrieben, wobei in Fig.2 gleiche Elemente wie bei der ersten Ausführungsform mit zu Fig. 1 gleichen Bezugszeichen bezeichnet sind.

Der in Fig.2 gezeigte Windabweiser 1' weist drei strukturell getrennte gemeinsam eine Gesamtlänge des Windabweisers 1' definierende Windabweiserteile 10, 20, 30 auf, womit der Windabweiser 1' gemäß Fig.2 zwei außermittige Trennstellen T, T aufweist. Mit anderen Worten ist gemäß Fig.2 zwischen den beiden äußeren Windabweiserteilen 10, 20, die mit den beiden Schwenklagerabschnitten 12, 22 versehen sind, eine weiteres Windabweiserteil 30 angeordnet, welches die beiden äußeren Windabweiserteile 10, 20 mechanisch miteinander verbindet.

Zum Zwecke der mechanischen Verbindung weist das zwischengeordnete Windabweiserteil 30 zwei Verbindungsenden 33, 34 mit jeweils einer Sackausnehmung 35, 36 auf.

Wie aus Fig.2 ersichtlich, ist das eine Verbindungsende 33 des zwischengeordneten Windabweiserteils 30 dem Verbindungsende 13 des einen äußeren Windabweiserteils 10 zugewandt, wobei diese beiden Verbindungsenden 13, 33 über ein wie beschriebenes schwingungsdämpfendes Material 40 mechanisch miteinander verbunden sind.

Ferner ist das andere Verbindungsende 34 des zwischengeordneten Windabweiserteils 30 dem Verbindungsende 23 des anderen äußeren Windabweiserteils 20 zugewandt, wobei diese beiden Verbindungsenden 23, 34 über ein zweites wie beschriebenes schwingungsdämpfendes Material 40 mechanisch miteinander verbunden sind.

Gemäß nicht dargestellten weiteren Ausführungsformen der Erfindung kann der Windabweiser auch mehr als drei Windabweiserteile aufweisen, wobei dann entsprechend viele Trennstellen mit schwingungsdämpfendem Material als Verbindungsmittel vorgesehen sind. Beispielsweise würde ein Windabweiser mit vier Windabweiserteilen zwei äußere Windabweiserteile, die mit den beiden Schwenklagerabschnitten versehen sind, und zwei zwischen den beiden äußeren Windabweiserteilen angeordnete Windabweiserteile aufweisen. Die beiden zwischengeordneten Windabweiserteile würden jeweils zwei Verbindungsenden und die beiden äußeren Windabweiserteile jeweils ein einziges Verbindungsende aufweisen. Der Windabweiser hätte somit drei Trennstellen, wobei jede Trennstelle mit schwingungsdämpfendem Material als Verbindungsmittel versehen wäre.

### Bezugszeichenliste

- 1: Windabweiser
- 1': Windabweiser
- 10: Windabweiserteil
- 11: Längsende
- 12: Schwenklagerabschnitt
- 13: Verbindungsende
- 14: Sackausnehmung
- 20: Windabweiserteil
- 21: Längsende
- 22: Schwenklagerabschnitt
- 23: Verbindungsende
- 24: Sackausnehmung
- 30: Windabweiserteil
- 33: Verbindungsende
- 34: Verbindungsende
- 35: Sackausnehmung
- 36: Sackausnehmung
- 40: schwingungsdämpfendes Material
- 41: Umlaufbund
- 60: Lageraufnahme
- 70: Lageraufnahme
- T: Trennstelle
- A: Abstand
- t1: Tiefe
- t2: Tiefe

## Patentansprüche

1. Windabweiser (1; 1') zur Geräuschminderung an einer Dachöffnung eines Fahrzeugs, wobei der Windabweiser (1; 1') zwei Schwenklagerabschnitte (12, 22) aufweist, die jeweils schwenkbar in zwei nahe der Dachöffnung an einer Karosserie des Fahrzeugs vorgesehene Lageraufnahmen (60, 70) zu montieren sind, und wobei der Windabweiser (1; 1') mit ein schwingungsdämpfendes Material (40) aufweisenden Geräuschminderungsmitteln versehen ist, wobei das schwingungsdämpfende Material (40) als Zwischenelement in einem über den Windabweiser (1; 1') von einer Lageraufnahme (60) bis zu der anderen Lageraufnahme (70) reichenden Schwingungspfad an dem Windabweiser (1; 1') vorgesehen ist, so dass das schwingungsdämpfende Material (40) eine Schwingungsübertragung entlang des Schwingungspfades dämpft, **dadurch gekennzeichnet, dass** der Windabweiser (1; 1') eine Mehrzahl von strukturell getrennten gemeinsam eine Gesamtlänge des Windabweisers (1; 1') definierenden Windabweiserteilen (10, 20, 30) aufweist, wobei zwischen benachbarten Windabweiserteilen (10, 20, 30) jeweils eine Trennstelle (T) gebildet ist, und wobei die Windabweiserteile (10, 20, 30) an jeder Trennstelle (T) mittels des schwingungsdämpfenden Materials (40) miteinander verbunden sind.

2. Windabweiser (1; 1') gemäß Anspruch 1, wobei benachbarte Windabweiserteile (10, 20, 30) jeweilige einander jeweils mit einer Stirnseite zugewandte Verbindungsenden (13, 23, 33, 34) aufweisen, wobei in der Stirnseite jedes Verbindungsendes (13, 23, 33, 34) eine Sackausnehmung (14, 24, 35, 36) bestimmter Tiefe (t1, t2) ausgebildet ist, wobei das schwingungsdämpfende Material (40) stoffschlüssig und/oder formschlüssig in die Sackausnehmungen (14, 24, 35, 36) eingesetzt ist, so dass eine mechanische Verbindung der benachbarten Windabweiserteile (10, 20, 30) erzielt ist, und wobei das schwingungsdämpfende Material (40) so geformt ist, dass die Stirnseiten der benachbarten Windabweiserteile (10, 20, 30) mit einem Abstand (A) voneinander angeordnet sind.

3. Windabweiser (1; 1') gemäß Anspruch 2, wobei das schwingungsdämpfende Material (40) so geformt ist, dass es den Abstand (A) zwischen den Stirnseiten der benachbarten Windabweiserteile (10, 20, 30) vollständig ausfüllt.

4. Windabweiser (1) gemäß einem der Ansprüche 1 bis 3, wobei der Windabweiser (1) genau zwei strukturell getrennte gemeinsam eine Gesamtlänge des Windabweisers (1) definierende Windabweiserteile (10, 20) aufweist.

5. Windabweiser (1) gemäß Anspruch 4, wobei die beiden Windabweiserteile (10, 20) jeweils eine gleiche Teillänge der Gesamtlänge des Windabweisers (1) definieren.

6. Windabweiser (1') gemäß einem der Ansprüche 1 bis 3, wobei der Windabweiser (1') mehr als zwei strukturell getrennte gemeinsam eine Gesamtlänge des Windabweisers (1') definierende Windabweiserteile (10, 20, 30) aufweist.

7. Windabweiser (1') gemäß Anspruch 6, wobei zwei Trennstellen (T) benachbart zu den Schwenklagerabschnitten (12, 22) angeordnet sind.

8. Windabweiser (1; 1') gemäß einem der Ansprüche 1 bis 7, wobei das schwingungsdämpfende Material (40) ein elastisches Material aufweist.

9. Windabweiser (1; 1') gemäß einem der Ansprüche 1 bis 8, wobei das schwingungsdämpfende Material (40) ein Elastomer aufweist.

10. Windabweiser (1; 1') gemäß einem der Ansprüche 1 bis 9, wobei der Windabweiser (1; 1') in Form eines sich über eine gesamte Breite der Dachöffnung in Bezug auf das Fahrzeug erstreckenden Bügels ausgebildet ist.

11. Windabweiser (1; 1') gemäß einem der Ansprüche 1 bis 10, wobei die beiden Schwenklagerabschnitte (12, 22) an zwei gegenüberliegenden Längsenden des Windabweisers (1; 1') angeordnet sind.

## Claims

1. Wind deflector (1; 1') for reducing noise at a roof opening of a vehicle, the wind deflector (1; 1') having two pivot bearing portions (12, 22) which are each to be mounted pivotally in two bearing receptacles (60, 70) provided on a body of a vehicle close to the roof opening, and the wind deflector (1; 1') being provided with a noise-reduction means having a vibration-damping material (40), the vibration-damping material (40) being provided on the wind deflector (1; 1') as an intermediate element in a vibration path reaching from one bearing receptacle (6) to the other bearing receptacle (70) via the wind deflector (1; 1'), so that the vibration-damping material (40) damps the transmission of vibrations along the vibration path, **characterised in that** the wind deflector (1; 1') has a plurality of structurally separate wind deflector parts (10, 20, 30) which jointly define an overall length of the wind deflector (1; 1'), a separation point (T) being formed between each adjacent wind deflector part (10, 20, 30), and the wind deflector parts (10, 20, 30) being interconnected at each separation point (T) by means of the vibration-damping material (40).

2. Wind deflector (1; 1') according to claim 1, wherein adjacent wind deflector parts (10, 20, 30) each have connection ends (13, 23, 33, 34) which, with one end face in each case, face one another, wherein a blind recess (14, 24, 35, 36) of a certain depth (t1, t2) is formed in the end face of each connection end (13, 23, 33, 34), wherein the vibration-damping material (40) is inserted in an integrally bonded manner and/or with a positive fit into the blind recesses (14, 24, 35, 36), so that the adjacent wind deflector parts (10, 20, 30) are mechanically connected, and wherein the vibration-damping material (40) is shaped such that the end faces of the adjacent wind deflector parts (10, 20, 30) are arranged at a spacing (A) from one another.

3. Wind deflector (1; 1') according to claim 2, wherein the vibration-damping material (40) is shaped such that said material completely fills the space (A) between the end faces of the adjacent wind deflector parts (10, 20, 30).

4. Wind deflector (1) according to any of claims 1 to 3, wherein the wind deflector (1) has exactly two structurally separate wind deflector parts (10, 20) which jointly define an overall length of the wind deflector (1).

5. Wind deflector (1) according to claim 4, wherein the two wind deflector parts (10, 20) each define an identical partial length of the overall length of the wind deflector (1).

6. Wind deflector (1') according to any of claims 1 to 3, wherein the wind deflector (1') has more than two structurally separate wind deflector parts (10, 20, 30) which define an overall length of the wind deflector (1').

7. Wind deflector (1') according to claim 6, wherein two separation points (T) are arranged adjacent to the pivot bearing portions (12, 22).

8. Wind deflector (1; 1') according to any of claims 1 to 7, wherein the vibration-damping material (40) comprises a resilient material.

9. Wind deflector (1; 1') according to any of claims 1 to 8, wherein the vibration-damping material (40) comprises an elastomer.

10. Wind deflector (1; 1') according to any of claims 1 to 9, wherein the wind deflector (1; 1') is formed as a stirrup which extends over the entire width of the roof opening relative to the vehicle.

11. Wind deflector (1; 1') according to any of claims 1 to 10, wherein the two pivot bearing portions (12, 22) are arranged on two opposite longitudinal ends of the wind deflector (1; 1').

## Revendications

1. Déflecteur de vent (1 ; 1'.) pour la réduction du bruit au niveau d'une ouverture de toit d'un véhicule, dans lequel le déflecteur de vent (1 ; 1') présente deux sections de palier pivotantes (12, 22), qui doivent être montées respectivement à pivotement dans deux logements de palier (60, 70) ménagés près de l'ouverture de toit sur la carrosserie du véhicule, et dans lequel le déflecteur de vent (1 ; 1') est pourvu de moyens de réduction du bruit présentant un matériau amortisseur d'oscillations (40), dans lequel le matériau amortisseur d'oscillations (40) se présente sous la forme d'un élément intermédiaire dans un trajet d'oscillations allant d'un logement de palier (60) à l'autre logement de palier via le déflecteur de vent (1 ; 1') de sorte que le matériau amortisseur d'oscillations (40) amortisse une transmission des oscillations le long du trajet d'oscillations, **caractérisé en ce que** le déflecteur de vent (1 ; 1') présente une pluralité de portions de déflecteur de vent (10, 20, 30) structurellement séparées et définissant conjointement la longueur totale du déflecteur de vent (1 ; 1'), dans lequel il existe entre des portions de déflecteur de vent voisines (10, 20, 30) respectivement un point de sectionnement (T) et dans lequel les portions de déflecteur de vent (10, 20, 30) sont reliées l'une à l'autre au niveau de chaque point de sectionnement (T) au moyen du matériau amortisseur d'oscillations (40).

2. Déflecteur de vent (1 ; 1') selon la revendication 1, dans lequel des portions de déflecteur de vent voisines (10, 20, 30) présentent des extrémités de liaison respectives (13, 23, 33, 34) tournées respectivement l'une vers l'autre par un côté frontal, dans lequel il est formé dans le côté frontal de chaque extrémité de liaison (13, 23, 33, 34) un évidement borgne (14, 24, 35, 36) de profondeur déterminée (t1, t2), dans lequel le matériau amortisseur d'oscillations (40) est inséré dans les évidements borgnes (14, 24, 35, 36) matériellement et/ou avec adaptation de formes de sorte qu'une liaison mécanique des portions de déflecteur de vent voisines (10, 20, 30) soit obtenue et dans lequel le matériau amortisseur d'oscillations (40) est formé de sorte que les côtés frontaux des portions de déflecteur de vent voisines (10, 20, 30) soient agencés à intervalle (A) l'un de l'autre.

3. Déflecteur de vent (1 ; 1') selon la revendication 2, dans lequel le matériau amortisseur d'oscillations (40) est formé de sorte qu'il remplisse complètement l'intervalle (A) entre les côtés frontaux des portions de déflecteur de vent voisines (10, 20, 30).

4. Déflecteur de vent (1) selon l'une quelconque des revendications 1 à 3, dans lequel le déflecteur de vent (1) présente exactement deux portions de déflecteur de vent structurellement séparées (10, 20) définissant conjointement la longueur totale du déflecteur de vent (1).

5. Déflecteur de vent (1) selon la revendication 4, dans lequel les deux portions de déflecteur de vent (10, 20) définissent respectivement une longueur partielle égale de la longueur totale du déflecteur de vent (1).

6. Déflecteur de vent (1') selon l'une quelconque des revendications 1 à 3, dans lequel le déflecteur de vent (1') présente plus de deux portions de déflecteur de vent structurellement séparées (10, 20, 30) définissant conjointement la longueur totale du déflecteur de vent (1').

7. Déflecteur de vent (1') selon la revendication 6, dans lequel deux points de sectionnement (T) sont aménagés au voisinage des sections de palier pivotantes (12, 22).

8. Déflecteur de vent (1, 1') selon l'une quelconque des revendications 1 à 7, dans lequel le matériau amortisseur d'oscillations (40) présente un matériau élastique.

9. Déflecteur de vent (1, 1') selon l'une quelconque des revendications 1 à 8, dans lequel le matériau amortisseur d'oscillations (40) présente un élastomère.

10. Déflecteur de vent (1, 1') selon l'une quelconque des revendications 1 à 9, dans lequel le déflecteur de vent (1 ; 1') se présente sous la forme d'un étrier s'étendant sur la largeur totale de l'ouverture de toit par rapport au véhicule.

11. Déflecteur de vent (1, 1') selon l'une quelconque des revendications 1 à 10, dans lequel les deux sections de palier pivotantes (12, 22) sont aménagées sur deux extrémités longitudinales opposées du déflecteur de vent (1 ; 1').
